# EUROPEAN PATENT SPECIFICATION

(11) **EP 0 537 933 B1**
(45) Date of publication and mention of the grant of the patent: **22.02.1995**
(21) Application number: 92309082.3
(22) Date of filing: 06.10.1992
(51) Int. Cl.: B64D 37/34

(54) **Aircraft fuel heating system**
Kraftstoffheizvorrichtung für Flugzeug
Dispositif de chauffage de carburant pour avion

(30) Priority: 17.10.1991 GB 9122063; 09.12.1991 GB 9126109; 25.07.1992 GB 9215867
(43) Date of publication of application: 21.04.1993
(73) Proprietor: GEC AEROSPACE LIMITED, Titchfield, Hampshire PO14 4QA (GB)
(72) Inventor: Taylor, Peter John, Fareham, Hampshire PO14 4RE (GB); Mason, Terence James William, Hamshire SO3 1JY (GB); Cook, Ronald George Thomas, Fareham, Hampshire PO15 6AR (GB)
(74) Representative: Cockayne, Gillian

(56) References cited:
- EP-A- 0 183 343
- CH-A- 318 578
- US-A- 3 398 692
- US-A- 3 898 968
- US-A- 4 261 175

## Description

This invention relates to aircraft fuel heating systems.

There is a requirement for aircraft which fly over and perhaps land in very cold areas such as the polar regions and Siberia to be provided with a fuel heating system which can prevent the fuel from freezing or waxing in the aircraft tanks. The obvious way of effecting such heating is to use an electric heater powered from the aircrafts electrical system but the necessary power level is high, typically 110kW, and there are structural and safety implications associated with such a system e.g. local hot spots, which could render such a system dangerous and therefore unacceptable. For example, the electric heater itself is insensitive to the condition or presence of the fuel, that is to say if the heater is inadvertently switched on when there is no fuel or hot fuel in contact with it, the heater will still produce the same amount of heat that it would if cold fuel were in contact with it. As a result electric heaters can produce a safety hazard because of the danger that they could cause fuel or the fuel system to become so overheated as to generate a fire hazard in the event of inadvertent activation of the heater.

It is an object of the present invention to provide an aircraft fuel heating system which obviates the need for electrical heating elements.

According to the present invention there is provided an aircraft fuel heating system comprising a storage tank for storing aircraft fuel, a driving rotary machine for heating said fuel, and a liquid pump for feeding fuel from said storage means through said rotary machine and back to said storage tank, whereby said fuel is caused to be heated by viscous drag produced in said machine.

In US-A-4 261 175 there is disclosed an aircraft fuel system incorporating a degrader having a stator and rotor combination between which fuel is fed from a fuel tank via a booster pump, whereby in operation the apparatus will shear the fuel and render it sufficiently fluid to pass through filters and pumps and be atomised at burners. Such an arrangement is not used for aircraft fuel heating.

In carrying out the invention it may be arranged that said liquid pump is driven by said rotary machine, said liquid pump conveniently taking the form of a centrifugal pump having a double-shrouded impeller.

Conveniently said centrifugal pump comprises an inducer driven in synchronism with said impeller and effective on the liquid fed to said impeller, a priming pump being provided for priming said centrifugal pump. The priming pump may take the form of a liquid ring pump driven in synchronism with said centrifugal pump.

In one preferred arrangement for carrying out the invention it will be arranged that said rotary machine comprises an electric motor through which said fuel is caused to flow by said liquid pump, said fuel being caused to be heated by viscous drag produced in said electric motor.

Advantageously said electric motor is immersed in the fuel to be heated, and may take the form of a two pole motor.

It may be arranged that said electric motor comprises a rotor mounted on a rotatable shaft and a stator surrounding said rotor, said fuel being caused to flow between said rotor and said stator to be heated by viscous drag therebetween, and in one especially envisaged arrangement it may be arranged that said electric motor comprises a two section stator which is split axially, said fuel being caused to flow into said motor between said two sections in order to minimise end load on said rotor due to the pressure of said fuel.

The electric motor may be energised from a three-phase supply, and may be started in star configuration and run in delta configuration.

Advantageously said liquid pump is also mounted on said rotatable shaft.

It may be arranged that said rotary machine comprises two axially spaced electric motors, which may be separate or which may be associated with a common rotatable shaft.

The two electric motors may be started sequentially in order to reduce peak starting current.

In another preferred arrangement for carrying out the invention it will be arranged that said rotary machine comprises a hydraulic motor, and a viscous drag generator driven by said hydraulic motor and through which said fuel is caused to flow by said liquid pump and in which said fuel is caused to be heated.

In carrying out the invention according to the said another preferred arrangement it may be arranged that said hydraulic motor comprises two intermeshing gears which are caused to contra-rotate by hydraulic fluid input to said hydraulic motor, one or both of said gears being coupled to said viscous drag generator.

In yet another preferred arrangement for carrying out the invention it will be arranged that said rotary machine comprises a pneumatic motor and a viscous drag generator driven by said motor and through which said fuel is caused to flow by said liquid pump and in which said fuel is caused to be heated.

The pneumatic motor may conveniently comprise an air turbine, typically an axial or radial turbine of impulse or reaction type, the turbine being coupled to a shaft of said viscous drag generator.

Alternatively said pneumatic motor may conveniently comprise an air motor, typically comprising two intermeshing gears or rotors which are caused to contra-rotate by air input to said air motor, one or both of said gears being coupled to said viscous drag generator.

It may be arranged that said viscous drag generator comprises a cylindrical rotor driven by said motor, and a cylindrical stator surrounding said rotor, said fuel being caused to flow between said rotor and said stator to be heated by viscous drag therebetween, and in one particularly advantageous form said viscous drag generator conveniently comprises an inner cylindrical rotor and an outer cylindrical rotor both driven by said hydraulic motor, and a cylindrical stator which is disposed between said inner and outer rotors.

Advantageously said viscous drag generator may comprise a two section rotor which is split axially, said fuel being caused to flow into said viscous drag generator between said two sections in order to minimise end load on said rotor due to the pressure of said liquid.

It may be arranged that said rotary machine and said liquid pump are constructed as an integral unit for mounting in said fuel storage tank, and one or more flame traps may be provided disposed in the flow path of said fuel for isolating parts thereof.

Some exemplary embodiments of the invention will now be described reference being made to the accompanying drawings, in which:
Figure 1 is a diagrammatic view of an aircraft fuel heating system in accordance to the present invention;
Figure 2 is a cross-sectional view of a fuel heating for use in a system in accordance with the present invention based on the use of an electric motor;
Figure 3 is a cross-sectional view of another electric motor based fuel heating system for use in a system in accordance with the present invention;
Figure 4 is a cross-sectional view of another fuel heating unit for use in a system in accordance with the present invention based on the use of a hydraulic motor; and
Figure 5 is a cross-sectional view of another fuel heating unit for use in a system in accordance with the present invention based on the use of a pneumatic motor.

The aircraft fuel heating systems to be described are based on the realisation that the viscosity of the fuel reduces as its temperature rises and that as a result a heater employing viscosity based drag to heat the fuel is self regulating since increasing fuel temperature will result in decreasing drag and as a result the amount of heat energy produced will decrease.

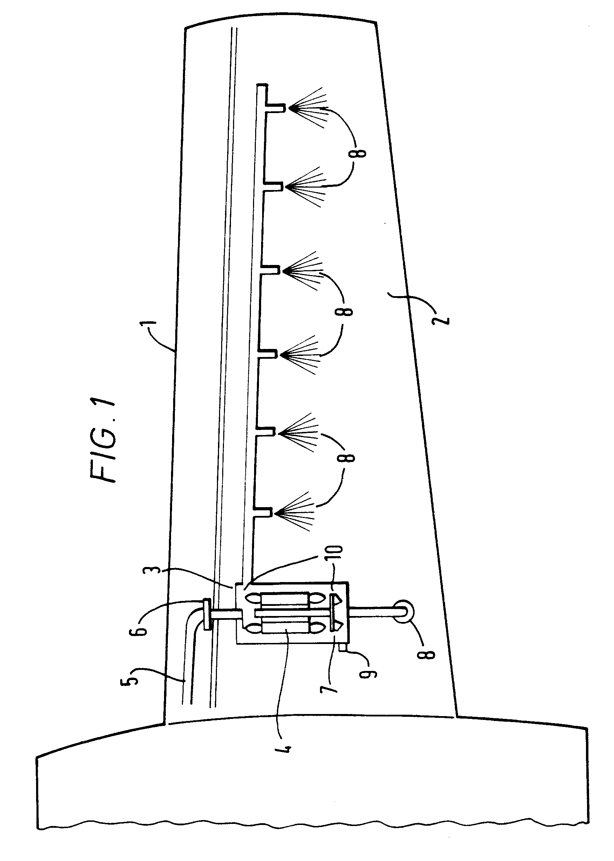

In Figure 1 of the drawings there is shown a diagrammatic view of an aircraft wing 1 in which is contained a fuel tank 2. Within the fuel tank 2 is mounted a fuel heating unit 3 which is accessible through a available door or trap (not shown). The fuel heating unit comprises a viscous drag generator 4, which in the form shown in Figure 1 is in the form of a high speed electric motor driven from the aircraft three-phase power supply 5 via a star/delta selector switch 6.

The driven viscous drag generator 4 drives a liquid pump impeller 7 which causes fuel in the fuel tank 2 to flow from a cold fuel inlet 8 through the viscous drag generator 4 and to a series of outlet nozzles 8 which return the warmed fuel back to the fuel tank 2.

Flame traps 10 are provided at convenient parts in the fuel flow path in the fuel heating unit 3 in order to isolate the unit from the fuel tank 2 should a malfunction occur causing a fire to be started.

Typically the fuel heating unit has a capacity of 55kW and with a flow rate of between 3785 and 7570 litres (1000 and 2000 U.S. gallons) per hour will impart a temperature rise of between 10°C to 20°C to the fuel. It may be arranged, for example, that the fuel heating unit 3 will be turned ON when the fuel temperature is below -34.4°C (-30°F) and will shut off when the fuel temperature reaches -28.9°C (-20°F) as detected by a thermostat 9 attached to the fuel heating unit 3.

It should herein be mentioned that the use of fuel flooded electric motors to drive a pumping element is known, but these are designed for maximum power output for minimum electrical input. To this end the frictional drag losses of fuel in the motors "air gap" are reduced to a minimum by keeping the rotor diameter as small as possible. Typically such a motor will generate less than 50W in heat compared to the typical 55kW of the viscous drag electric motor of the present invention.

It should also be mentioned that although in the fuel heating unit 3 of Figure 1 the viscous drag generator 4 and the liquid pump impeller 7 are shown as an integral unit, it is envisaged that these may be provided independently. Typically an aircraft will be provided with a number of fuel booster pumps which may have excess capacity, and it would be possible to feed the viscous drag generator 4 from one or more of these booster pumps, thereby obviating the need for the liquid pump impeller 7.

The aircraft fuel heating system described with reference to Figure 1 utilises the viscous drag from a rotor of a fuel flooded electric motor to absorb the output power of the motor and convert it into low grade heat to heat the fuel.

Various effects influence the production of viscous drag. In a fuel flooded induction motor the viscous drag of the rotor is a function of the fluid used plus the speed, airgap between rotor and stator, rotor diameter, length and surface finish.

Recent advances in electric motors have provided motors that start as an induction motor and when up to speed switch to being a synchronous motor thus increasing the power factor to near unity. Hence the power absorbed in drag by the rotor in such a motor is the power produced by the generator.

If such a motor is used in a heater of this type, when the power factor is unity the current drawn during dry running when no fuel is present, is effectively only the I²R losses plus bearing frictional losses since the viscosity of air is very low. Similarly the heat generated in dry running is also very low. In a unit tested this dry running current would only be 2 amps for a 27kW unit machine. Using a brushless D.C. motor also has the same effect.

In this way large amounts of power can be converted safely into low grade heat when the fuel is cold and has a high viscosity without any overheating problems arising when the fuel is hot or not present, because the amount of heat produced will drop as the temperature of the fuel increases and will drop still further if air rather than fuel fills the heater.

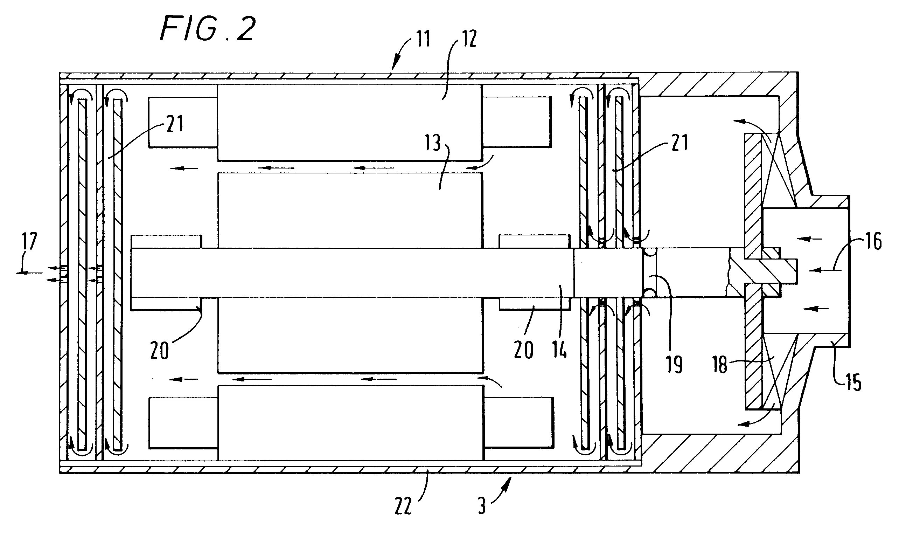

In Figure 2 of the drawings there is shown a cross-sectional view of one form of fuel heating unit 3 of Figure 1.

The fuel heating unit 3 of Figure 2 comprises an electric motor 11 having a stator 12 and a rotor 13, the rotor 13 being mounted on a shaft 14 and being sized to produce the required output heating power with maximum efficiency and maximum power factor by providing the necessary power absorbed by viscous means to produce the heating power. Fuel enters the heating unit 3 along a pipe 15 coaxial with the axis of the rotor 13, as indicated by an arrow 16. Fuel leaves the heating unit 13 indicated by the arrow 17 along a second pipe (not shown). The motive fluid pressure to drive the fuel through the heating unit 3 is provided by a centrifugal impeller system 18 mounted on one end of the rotor shaft 14. A safety feature is that a thermal barrier and shearneck is provided by a narrowed portion 19 of the shaft 14. This narrowed portion 19 is sized to allow only sufficient power to drive the centrifugal impeller system 18 such that the majority of the kinetic energy in the heating unit 3 is held within the rotor 13. If the power delivered increases beyond this level the narrowed portion 19 will break. The stator 12 is sized as a containment shield for the rotor 13 in the event of a rotor burst.

The rotor 13, shaft 14 and impeller system 18 are all supported by a pair of bearings 20. To maintain safety, the fuel delivered across the motor 11 is passed through flame traps 21 before entry and exit from the motor 11. A casing 22 surrounds the entire heating unit 3 and the casing 22 is formed in part from filamic material to prevent sparking eroding through the casing 22. The stator 12 and rotor 13 windings of the motor 11 contain thermal fuses (not shown) to prevent the outer casing 22 of the motor 11 reaching a temperature of 200 degrees centigrade to prevent autoignition of the fuel in the event of motor overheating.

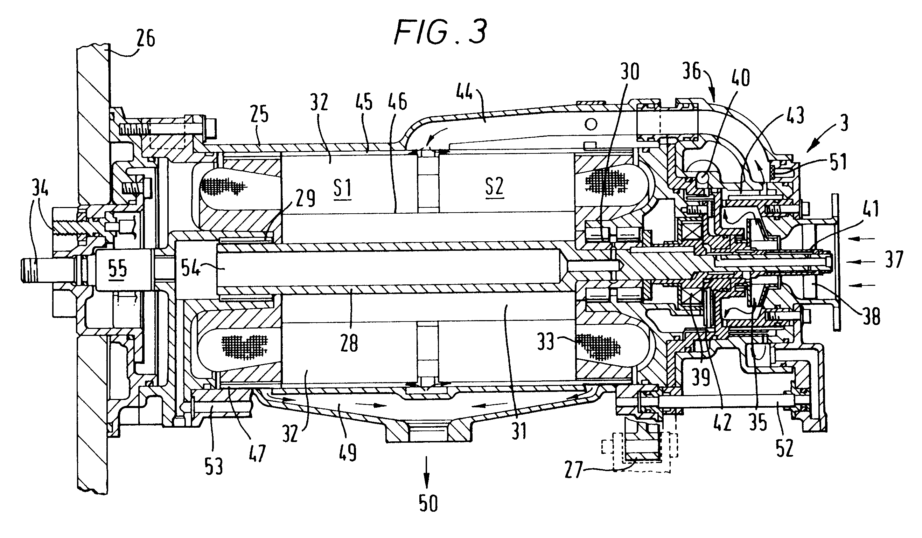

In Figure 3 of the drawings there is depicted a cross-sectional view of an alternative form of the fuel heating unit 3 of Figure 1, again based on the use of an electric motor. The unit 3 comprises a housing 25 which at its front, left hand end is secured to a fuel tank mounting 26 and which at its rear end is provided with a rear support 27. Mounted within the housing 25 is a rotatable shaft 28 which is mounted on two fuel-lubricated carbon journal bearings 29 and 30. Secured to the shaft 28 is the rotor 31 of an electric motor 32 which constitutes the viscous drag generator 4 of the heating unit 3. The rotor 31 is typically of robust brazed construction, having copper rotor bars trapped in silicon-iron laminations for additional resistance to CF loads. Around the rotor 31 is disposed the stator 32 of the electric motor 32, the stator 32 being constructed in two axially spaced apart sections, section S1 and section S2, each formed from silicon-iron laminations, and is provided with a common stator winding 33. The electric motor 32 is a three-phase induction motor which is wound as a 2-pole machine and designed to operate at a synchronous speed of 24,000rpm. It is connected to the aircrafts three-phase supply (not shown) by electrical connectors 34 via a 2-way selector switch (not shown) which allows the motor 32 to be started in star mode and then switched to delta mode for normal running, this greatly reducing start-up current transients. The selector switch, which may be positioned inside or outside the unit 3, is controlled by a suitable electric timer (not shown). The stator winding 33 may also be provided with thermal protection devices (not shown) to stop the motor 32 should excess temperatures be sensed.

Also mounted on the shaft 28 is the impeller 35 already referred to in Figure 1, of a fuel pump 36. The impeller 35 is in the form of a double-shrouded centrifugal impeller and is effective for drawing fuel from the fuel supply input 37 into the fuel pump 36.

An inducer 38 is also provided on the shaft 28 which assists pump filling at high speeds, and prevents air coring.

Because aircraft fuel contains a high proportion of air or vapour, it has been found that the fuel pump 36, when the unit 3 is being started, is incapable, because of the air or vapour, of raising the fuel to the level of the fuel pump 36. A liquid ring pump 39 is provided mounted on the shaft 28, which bleeds off the air or gas to a bleed output 40 and enables the fuel pump 36 to be "primed" with the necessary fuel.

The operation of the fuel heating unit 3 thus far described with reference to Figure 3 is as follows.

When the electric motor 32 is energised, the shaft 28 is caused to be rotated. Air/vapour/fuel is drawn into the shaft 28 from the fuel supply 37 and enters a chamber adjacent the liquid ring pump 39 via a flame trap 41. The liquid ring pump 39, which is of the positive displacement type, outputs the air/vapour/fuel via a flame trap 42 and the bleed output 40. The action of the liquid ring pump 39 primes the fuel pump 36 with fuel from the fuel supply 37.

Pressurised fuel from the impeller 35 is fed via a flame trap 43 to a fuel duct 44 by means of which it is fed between the two sections, S1 and S2, of the motor stator 32. Pressurised fuel from the fuel duct 44 flows in both directions in the gap 45 between the two sections S1 and S2 of the motor stator 32 and the wall of the housing 25 and also flows in both directions in the circumferential gap 46 between the stator 32 and the rotor 31. In the gap 46, the large sheer forces produced by the high rotor velocity result in viscous heating of the fuel in the gap 46. Heat generated as watt losses within the stator 32 and rotor 31 are transferred to the fuel.

The fact that the fuel flows in both directions from the centre of the stator 32 minimises end load on the rotor 31 which can result due to the pressure of the fluid.

After passage through the gaps 45 and 46, fuel is passed through flame traps 47 and 48 respectively at each end of the motor 32, and are directed, via an outlet duct 49 to a heated fuel delivery output 50 for feeding to the nozzles 8 (Figure 1) whereby the heated fuel is returned to the aircraft fuel tank 2 (Figure 1).

In order to provide lubrication for the journal bearings 29 and 30, some of the pressurised fuel from the pump impeller 35 is fed through a wash-through filter 51, to a fluid output 52 which is coupled by means of a tube (not shown) to a fluid input 53 which feeds the fuel to the hollow interior 54 of the shaft 28 and thence to the bearings 29 and 30.

A fuel pressure switch 55 is provided, for sensing the fuel pressure in the shaft interior 54 to provide an indication to the aircraft cabin when the fuel heating unit 3 is ON.

Although in the fuel heating unit 3 of Figure 3 an electric motor 32 having a two section stator has been used, it will be appreciated that a single section stator could be used, resulting in inevitable end loads on the stator 32. Alternatively two separate electric motors may be used, either using a common shaft 28 or separate shafts, one of which would be used to drive the fuel pump 36 and liquid ring pump 39, in which case sequential starting of the two electric motors could be used in order to reduce peak starting current compared to using a single or two-section motor.

The fuel heating system 3 of Figure 6 is advantageous in that a large percentage of the heat generated is developed directly within the fluid with no areas of high temperature differential being present. Since the amount of heat generated is dependent upon fluid viscosity, the power dissipation tends to fall as the temperature rises, which is beneficial for the overall system. The electric motor will also become unloaded if the fuel supply 37 becomes deprimed for short periods, which is again beneficial.

Although the fuel heating unit 3 of Figure 3 has been found to be very effective, if an aircraft is provided with two units, one in each wing, assuming that each has a capacity of 55kW, a large demand is placed on the aircrafts electrical system, and load shedding may have to be used when the two units are turned ON. This may require, for example, that the aircrafts galley be closed down which can cause considerable inconvenience.

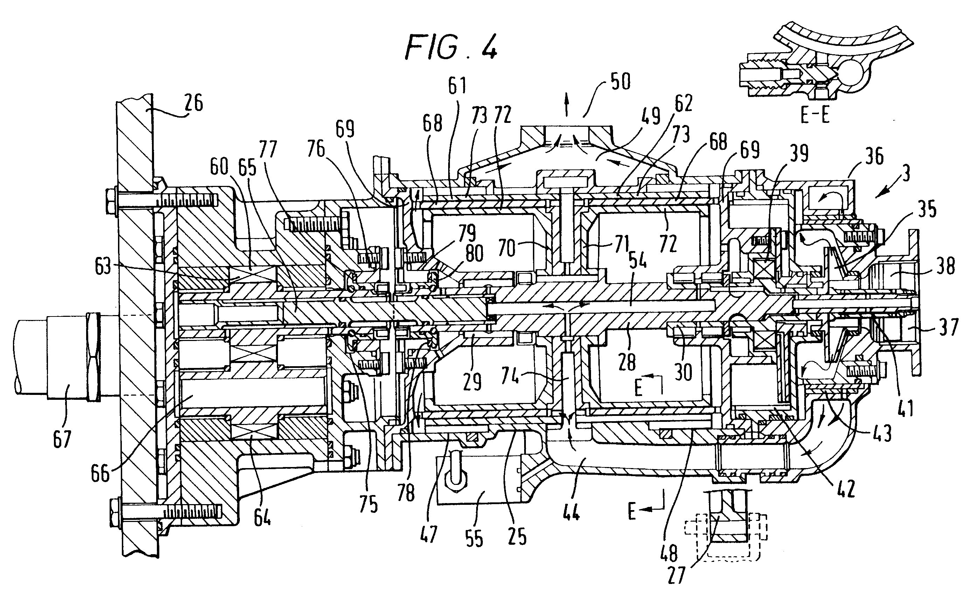

In Figure 4 of the drawings there is shown a modified form of the fuel heating unit 3 of Figure 3 which obviates the need for the electric motor 32. In the unit of Figure 4, the electric motor 32 of Figure 3 has been replaced by a hydraulic motor 60 driving viscous drag generators 61 and 62. In this way the hydraulic motor 60 is driven from the aircrafts hydraulic system and no additional load is placed on its electrical system.

The hydraulic motor 60 in Figure 4 consists of two intermeshing precision spur gears 63, 64, each with sleeved bearings. The gear 63 drives the main shaft 28 of the unit via a quill shaft 65, and the gear 64 free wheels on a shaft 66. Hydraulic fluid is applied to the hydraulic motor 60 via a feed hydraulic connector 67 and hydraulic fluid from the hydraulic motor 60 is output to a return hydraulic connector (not shown).

The viscous drag generators 61 and 62 each comprise a cylindrical stator 68 which is supported at one end 69 on the housing 25 and which extends inwards parallel to the axis of the shaft 28. The viscous drag generators 61 and 62 also comprise a common rotor 70 which is secured to the shaft 28 and which includes a radially extending central support member 71 from which extend inner 72 and outer 73 cylindrical rotor members, between which are sandwiched the cylindrical stator 68. Pressurised fuel is fed into the hydraulic drag generators 61, and 62 from the fuel duct 44 centrally between them and flows in both directions between the cylindrical stator 68 and the cylindrical rotors 72 and 73 of each of the generators 61 and 62 and between rotor 73 and the housing 25, thereby achieving axial force balance, and as a result of the high relative speed and small gap between the cylinders, a large viscous drag occurs, causing the fuel to be heated. The heated fuel flows via the flame traps 47 and 48 into the outlet duct 49 and to the heated fuel delivery output 50. It is arranged that pressurised fuel is fed down the central region 74 of the radially extending central support member 71 of the rotor 70 to the hollow interior 54 of the shaft 28 and thence to the bearings 29 and 30 supporting the shaft 28, and to the quill shaft 65.

Operation of the fuel heating unit 3 of Figure 4 is detected by means of fuel pressure switch 55 sensing fuel pressure in the fuel duct 44 and is used to provide an indication in the aircraft cabin.

In the fuel heating unit 3 of Figure 4 it is important that the hydraulic fluid circuit for driving the hydraulic motor 60 and the fuel being heated in the viscous drag generators 61 and 62 are kept completely separate. This is achieved by providing a dynamic seal 75 between the body 76 of the hydraulic motor 60 and a rotary member 77 attached to the gear shaft 63, and by providing a further dynamic seal 78 between the body 79 of the viscous drag generators 61 and 62 and a rotary member 80 attached to the main shaft 28. Various other static seals are provided to ensure that the hydraulic fluid and the fuel are maintained completely separate.

The operation of the remaining parts of the fuel heating unit 3 of Figure 4 are as described with reference to the unit of Figure 3.

It is envisaged that the fuel heating unit of Figure 4 will run at a speed typically of 11000rpm until priming of the fuel pump 36 is achieved by the liquid ring pump 39 (e.g. for a few seconds). When fully primed it is envisaged that the running speed may typically be 7000rpm. It is to be noted that speed control is open loop and is therefore highly reliable.

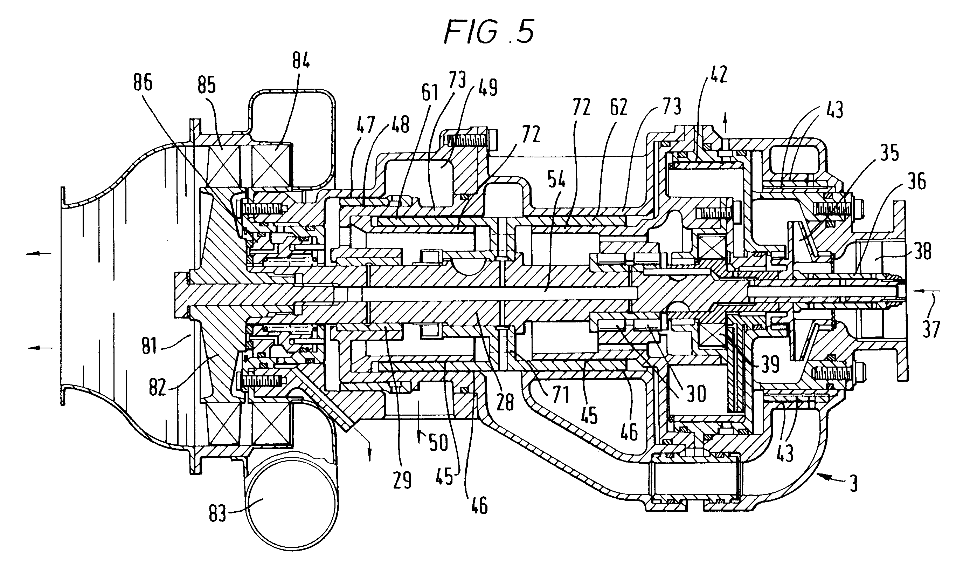

In Figure 5 of the drawings there is depicted a cross-sectional view of an alternative form of the fuel heating unit 3 of Figure 1, which is basically similar to that of Figure 4 but in which the hydraulic motor 60 of Figure 4 is replaced by a pneumatic motor 81 mounted on the shaft 28 of the unit 3.

The pneumatic motor 81 shown in Figure 5 comprises an axially driven air turbine 82 which is supplied with air through an air supply duct 83 which directs air via circumferentially disposed fixed nozzles 84 onto blades 85 of the turbine 81, thereby causing the turbine 81 to rotate. To separate the fuel from the air a double seal 86 with interstage drain is incorporated for safety. The viscous drag generators 61 and 62 attached to the shaft 28 rotate between the stator cylinders 72 and the housing 73 thereby heating the fuel. The operation of the fuel heating unit 3 of Figure 5 is otherwise similar to that of Figure 4.

Although in the fuel heating unit of Figure 5 a pneumatic motor 81 in the form of an axially driven air turbine 82 has been used to drive the shaft 28, other types of pneumatic motor may be used, such as a circumferentially driven air turbine, which may be of impulse or reaction type or alternatively an air motor may be used which may typically comprise two intermeshing gears or rotors which are caused to contra-rotate by air input to it, one or both of the gears or rotors being coupled to the shaft 28 to cause the rotor or rotors of the viscous drag generator to rotate.

## Claims

1. An aircraft fuel heating system (3) comprising a storage tank (2) for storing aircraft fuel, a driving rotary machine (4) for heating said fuel, and a liquid pump (7) for feeding fuel from said storage tank (2) through said rotary machine (4) and back to said storage tank (2), whereby said fuel is caused to be heated by viscous drag produced in said machine (3).

2. A system as claimed in claim 1, in which said liquid pump (7) is driven by said rotary machine.

3. A system as claimed in claim 1 or claim 2, in which said liquid pump (7) takes the form of a centrifugal pump (18, 36).

4. A system as claimed in claim 3, in which said centrifugal pump (18, 36) comprises a double-shrouded impeller (35).

5. A system as claimed in claim 4, in which said centrifugal pump (18, 36) comprises an inducer (38) driven in synchronism with said impeller (35) and effective on the liquid fed to said impeller (35).

6. A system as claimed in any of claims 3 to 5, comprising a priming pump (39) for priming said centrifugal pump (18, 36).

7. A system as claimed in claim 6, in which said priming pump (39) takes the form of a liquid ring pump (39) driven in synchronism with said centrifugal pump (18, 36).

8. A system as claimed in any preceding claim, in which said rotary machine (4) comprises an electric motor (11) through which said fuel is caused to flow by said liquid pump (18), said fuel being caused to be heated by viscous drag produced in said electric motor (11).

9. A system as claimed in claim 8, in which said electric motor (11, 32) is immersed in the fuel to be heated.

10. A system as claimed in claim 8 or claim 9, in which said electric motor (11, 32) takes the form of a two pole motor.

11. A system as claimed in claims 8 to 10, in which said electric motor (11, 32) comprises a rotor (13) mounted on a rotatable shaft (14) and a stator (12) surrounding said rotor (13), said fuel being caused to flow between said rotor, (13) and said stator (12) to be heated by viscous drag therebetween.

12. A system as claimed in 11, in which said electric motor (11, 32) comprises a two section stator (51, 52) which is split axially, said fuel being caused to flow into said motor (11, 32) between said two sections (51, 52) in order to minimise end load on said rotor (13) due to the pressure of said fuel.

13. A system as claimed in any of claims 8 to 12, in which said electric motor (11, 32) is energised from a three-phase supply, and is started in star configuration and is run in delta configuration.

14. A system as claimed in claim 11, in which said liquid pump (35) is also mounted on said rotatable shaft (28).

15. A system as claimed in any of claims 8 to 14, in which said rotary machine (4) comprises two axially spaced electric motors.

16. A system as claimed in claim 15, in which said electric motors are separate.

17. A system as claimed in claim 15, in which said electric motors are associated with a common rotatable shaft.

18. A system as claimed in any of claims 15 to 17, in which said electric motors are started sequentially in order to reduce peak starting current.

19. A system as claimed in any of claims 1 to 7, in which said rotary machine (4) comprises a hydraulic motor, and a viscous drag generator (61, 62) driven by said hydraulic motor (60) and through which said fuel is caused to flow by said liquid pump (36) and in which said fuel is caused to be heated.

20. A system as claimed in claim 19, in which said hydraulic motor (60) comprises two intermeshing gears (63, 64) which are caused to contra-rotate by hydraulic fluid input to said hydraulic motor (60), one or both of said gears being coupled to said viscous drag generator (61, 62).

21. A system as claimed in any of claims 1 to 7, in which said rotary machine (4) comprises a pneumatic motor, and a viscous drag generator (61, 62) driven by said motor (81) and through which said fuel is caused to flow by said liquid pump (36) and in which said fuel is caused to be heated.

22. A system as claimed in claim 21, in which said pneumatic motor (81) comprises an air turbine (82).

23. A system as claimed in claim 22, in which said air turbine (82) comprises an axial or radial turbine of impulse or reaction type, the turbine (82) being coupled to a shaft (28) of said viscous drag generator (61, 62).

24. A system as claimed in claim 21, in which said pneumatic motor (81) comprises an air motor.

25. A system as claimed in claim 24, in which said air motor comprises two intermeshing gears or rotors which are caused to contra-rotate by air input to said air motor, one or both of said gears being coupled to said viscous drag generator.

26. A system as claimed in any of claims 19 to 25, in which said viscous drag generator (61, 62) comprises a cylindrical rotor driven (71, 72) by said motor, and a cylindrical stator (68) surrounding said rotor (68), said fuel being caused to flow between said rotor (68) and said stator (71, 72) to be heated by viscous drag therebetween.

27. A system as claimed in claim 26, in which said viscous drag generator (61, 62) comprises an inner cylindrical rotor (72) and an outer cylindrical rotor (73) both driven by said hydraulic motor (60), and a cylindrical stator (68) which is disposed between said inner and outer rotors (72, 73).

28. A system as claimed in any of claims 19 to 27, in which said viscous drag generator (61, 62) comprises a two section rotor (61, 62) which is split axially, said fuel being caused to flow into said viscous drag generator (61, 62) between said two sections (61, 62) in order to minimise end load on said rotor (61, 62) due to the pressure of said liquid.

29. A system as claimed in any preceding claim, in which said rotary machine (4) and said liquid pump (18, 36) are constructed as an integral unit for mounting in said fuel storage tank.

30. A system as claimed in any preceding claim, comprising one or more flame traps (10) disposed in the flow path of said fuel for isolating parts thereof.

## Patentansprüche

1. Ein Flugzeugkraftstoffheizsystem (3) mit einem Speichertank (2) zum Speichern von Flugzeugkraftstoff, einer antreibenden Rotationsmaschine (4) zum Erwärmen des Kraftstoffs, und einer Flüssigkeitspumpe (7) zum Pumpen von Kraftstoff von dem Speichertank (2) durch die Rotationsmaschine (4) und zurück zu dem Speichertank (2), wodurch bewirkt wird, daß der Kraftstoff durch Flüssigkeitsreibung, die in der Maschine (3) erzeugt wird, erwärmt wird.

2. Ein System wie in Anspruch 1 beansprucht, in dem die Flüssigkeitspumpe (7) durch die Rotationsmaschine angetrieben ist.

3. Ein System wie in Anspruch 1 oder Anspruch 2 beansprucht, in dem die Flüssigkeitspumpe (7) die Form einer Zentrifugalpumpe (18, 36) annimmt.

4. Ein System wie in Anspruch 3 beansprucht, in dem die Zentrifugalpumpe (18, 36) einen doppelt ummantelten Impeller (35) aufweist.

5. Ein System wie in Anspruch 4 beansprucht, in dem die Zentrifugalpumpe (18, 36) einen Pumpeneinlaufkranz (38) umfaßt, der in Synchronisation mit dem Impeller (35) angetrieben ist und auf die dem Impeller (35) zugeführte Flüssigkeit wirksam ist.

6. Ein System wie in irgendeinem der Ansprüche 3 bis 5 beansprucht, mit einer Handpumpe für Anlaßkraftstoff (39), um die Zentrifugalpumpe (18, 36) zum Anlassen mit Kraftstoff zu versorgen.

7. Ein System wie in Anspruch (6) beansprucht, in dem die Handpumpe für den Anlaßkraftstoff (39) die Form einer Flüssigkeitsringpumpe (39) annimmt, die in Synchronisation mit der Zentrifugalpumpe (18, 36) angetrieben ist.

8. Ein System wie in irgendeinem der vorhergehenden Ansprüche beansprucht, in dem die Rotationsmaschine (4) einen elektrischen Motor (11) aufweist, durch den bewirkt wird, daß der Kraftstoff durch die Flüssigkeitspumpe (18) zum Strömen gebracht wird, wobei durch die Flüssigkeitsreibung, welche in dem elektrischen Motor (11) erzeugt wird, bewirkt wird, daß der Kraftstoff erwärmt wird.

9. Ein System wie in Anspruch 8 beansprucht, in dem der elektrische Motor (11, 32) in den zu erwärmenden Kraftstoff eingetaucht ist.

10. Ein System wie in Anspruch 8 oder Anspruch 9 beansprucht, in dem der elektrische Motor (11, 32) die Form eines zweipoligen Motors annimmt.

11. Ein System wie in den Ansprüchen 8 bis 10 beansprucht, in dem der elektrische Motor (11, 32) einen Rotor (13), der an einer drehbaren Welle (14) montiert ist, und einen Stator (12), der den Rotor (13) umgibt, aufweist, wobei der Kraftstoff dazu gebracht wird, zwischen dem Rotor (13) und dem Stator (12) zu fließen, um durch die Flüssigkeitsreibung zwischen ihnen erwärmt zu werden.

12. Ein System wie in Anspruch 11 beansprucht, in dem der elektrische Motor (11, 32) einen aus zwei Abschnitten bestehenden Stator (51, 52) aufweist, der in Axialrichtung geteilt ist, wobei der Kraftstoff dazu gebracht wird, in den Motor (11, 32) zwischen den beiden Abschnitten (51, 52) hineinzuströmen, um die Endlast des Rotors (13) aufgrund des Druckes des Kraftstoffes zu minimieren.

13. Ein System wie in irgendeinem der Ansprüche 8 bis 12 beansprucht, in dem der elektrische Motor (11, 32) von einer Dreiphasenversorgung mit Energie versorgt wird und in Sternschaltung gestartet wird und in Dreieckschaltung betrieben wird.

14. Ein System wie in Anspruch 11 beansprucht, in dem die Flüssigkeitspumpe (35) auch an der drehbaren Welle (28) montiert ist.

15. Ein System wie in irgendeinem der Ansprüche 8 bis 14 beansprucht, in dem die Rotationsmaschine (4) zwei axial beabstandete elektrische Motoren aufweist.

16. Ein System wie in Anspruch 15 beansprucht, in dem die elektrischen Motoren voneinander getrennt sind.

17. Ein System wie in Anspruch 15 beansprucht, in dem die elektrischen Motoren einer gemeinsamen drehbaren Welle zugeordnet sind.

18. Ein System wie in irgendeinem der Ansprüche 15 bis 17 beansprucht, in dem die elektrischen Motoren aufeinanderfolgend gestartet werden, um einen Spitzenwert eines Startstroms zu verringern.

19. Ein System wie in irgendeinem der Ansprüche 1 bis 7 beansprucht, in welchem die Rotationsmaschine 4 einen Hydraulikmotor und einen durch den Hydraulikmotor (60) angetriebenen Flüssigkeitsreibungsgenerator (61, 62), durch und den der Kraftstoff durch die Flüssigkeitspumpe (36) gebracht wird zu strömen und in dem bewirkt wird, daß der Kraftstoff erwärmt wird, aufweist.

20. Ein System wie in Anspruch 19 beansprucht, in dem der Hydraulikmotor (60) zwei miteinander kämmende Zahnräder (63, 64) aufweist, die durch eine Hydraulikflüssigkeitszufuhr zu dem Hydraulikmotor (60) dazu gebracht werden, sich entgegengesetzt zu drehen, wobei ein Zahnrad oder beide Zahnräder mit dem Flüssigkeitsreibungsgenerator (61, 62) gekuppelt ist bzw. sind.

21. Ein System wie in irgendeinem der Ansprüche 1 bis 7 beansprucht, in dem die Rotationsmaschine (4) einen Pneumatikmotor und einen durch den Motor (81) angetriebenen Flüssigkeitsreibungsgenerator (61, 62), durch den der Kraftstoff durch die Flüssigkeitspumpe (36) gebracht wird zu strömen und in dem bewirkt wird, daß der Kraftstoff erwärmt wird, aufweist.

22. Ein System wie in Anspruch 21 beansprucht, in dem der Pneumatikmotor (81) eine Luftturbine (82) aufweist.

23. Ein System wie in Anspruch 22 beansprucht, in dem die Luftturbine (82) eine Axial- oder Radialturbine der Impuls- oder Reaktionsart aufweist, wobei die Turbine (82) mit einer Welle (28) des Flüssigkeitsreibungsgenerators (61, 62) gekoppelt ist.

24. Ein System wie in Anspruch 21 beansprucht, in dem der Pneumatikmotor (81) einen Luftmotor aufweist.

25. Ein System wie in Anspruch 24 beansprucht, in dem der Luftmotor zwei miteinander kämmende Zahnräder oder Rotoren aufweist, die durch eine Luftzufuhr zu dem Luftmotor dazu gebracht werden, entgegengesetzt zu drehen, wobei ein Zahnrad oder beide Zahnräder mit dem Flüssigkeitsreibungsgenerator gekuppelt ist bzw. sind.

26. Ein System wie in irgendeinem der Ansprüche 19 bis 25 beansprucht, in welchem der Flüssigkeitsreibungsgenerator (61, 62) einen durch den Motor angetriebenen zylindrischen Rotor (71, 72) und einen zylindrischen Stator (68), der den Rotor umgibt, aufweist, wobei der Kraftstoff dazu gebracht wird, zwischen dem Rotor (68) und dem Stator (71, 72) hindurchzufließen, um durch die Flüssigkeitsreibung zwischen diesen erwärmt zu werden.

27. Ein System wie in Anspruch 26 beansprucht, in welchem der Flüssigkeitsreibungsgenerator (61, 62) einen inneren zylindrischen Rotor (72) und einen äußeren zylindrischen Rotor (73), die beide durch den Hydraulikmotor (60) angetrieben sind, und einen zylindrischen Stator (68), der zwischen den inneren und äußeren Rotoren (72, 73) angeordnet ist, aufweist.

28. Ein System wie in irgendeinem der Ansprüche 19 bis 27 beansprucht, in welchem der Flüssigkeitsreibungsgenerator (61, 62) einen aus zwei Abschnitten bestehenden Rotor (61, 62) aufweist, der axial geteilt ist, wobei der Kraftstoff dazu gebracht wird, in den Flüssigkeitsreibungsgenerator (61, 62) durch die beiden Abschnitte (61, 62) hineinzuströmen, um die Endlast des Rotors (61, 62) aufgrund des Drucks der Flüssigkeit zu minimieren.

29. Ein System wie in irgendeinem der vorhergehenden Ansprüche beansprucht, in welchem die Rotationsmaschine (4) und die Flüssigkeitspumpe (18, 36) als eine integrale Einheit zur Montage in dem Kraftstoffspeichertank aufgebaut sind.

30. Ein System wie in irgendeinem der vorhergehenden Ansprüche beansprucht, mit einer oder mehreren Flammenrückschlagsicherungen (10), die in dem Strömungspfad des Kraftstoffes zur Isolierung von dessen Teilen angeordnet sind.

## Revendications

1. Système de réchauffage (3) pour le carburant d'un avion, comprenant un réservoir de stockage (2) pour stocker du carburant, une machine rotative motrice (4) pour réchauffer ledit carburant et une pompe à liquide (7) pour alimenter du carburant depuis ledit réservoir de stockage (2) via ladite machine rotative (4) et en retour vers ledit réservoir de stockage (2), grâce à quoi du carburant est amené à être réchauffé par traînée visqueuse produite dans ladite machine (3).

2. Système selon la revendication 1, dans lequel ladite pompe à liquide (7) est entraînée par ladite machine rotative.

3. Système selon l'une ou l'autre des revendications 1 et 2, dans lequel ladite pompe à liquide (7) prend la forme d'une pompe centrifuge (18, 36).

4. Système selon la revendication 3, dans lequel ladite pompe centrifuge (18, 36) comprend un rotor (35) à double chemise.

5. Système selon la revendication 4, dans lequel ladite pompe centrifuge (18, 36) comprend un inducteur (38) entraîné en synchronisme avec ledit rotor (35) et agissant sur le liquide fourni audit rotor (35).

6. Système selon l'une quelconque des revendications 3 à 5, comprenant une pompe d'amorçage (39) pour amorcer ladite pompe centrifuge (18, 36).

7. Système selon la revendication 6, dans lequel ladite pompe d'amorçage (39) prend la forme d'une pompe annulaire à liquide (39) entraînée en synchronisme avec ladite pompe centrifuge (18, 36).

8. Système selon l'une quelconque des revendications précédentes, dans lequel ladite machine rotative (4) comprend un moteur électrique (11) au moyen duquel ledit carburant est amené à s'écouler par ladite pompe à liquide (18), ledit carburant étant amené à être réchauffé par traînée visqueuse produite dans ledit moteur électrique (11).

9. Système selon la revendication 8, dans lequel ledit moteur électrique (11, 32) est immergé dans le carburant à réchauffer.

10. Système selon l'une ou l'autre des revendications 8 et 9, dans lequel ledit moteur électrique (11, 32) prend la forme d'un moteur bipolaire.

11. Système selon les revendications 8 à 10, dans lequel ledit moteur électrique (11, 32) comprend un rotor (13) monté sur un arbre rotatif (14), et un stator (12) qui entoure ledit rotor (13), ledit carburant étant amené à s'écouler entre ledit rotor (13) et ledit stator (12) pour être réchauffé par traînée visqueuse entre eux.

12. Système selon la revendication 1, dans lequel ledit moteur électrique (11, 32) comprend un stator en deux tronçons (51, 52) qui sont axialement séparés, ledit carburant étant amené à s'écouler à l'intérieur dudit moteur (11, 32) entre lesdits deux tronçons (51, 52) afin de mimimiser la charge axiale sur ledit rotor (13) en raison de la pression dudit carburant.

13. Système selon l'une quelconque des revendications 8 à 12, dans lequel ledit moteur électrique (11, 32) est alimenté depuis une source triphasée, et il est démarré sous une configuration en étoile et fonctionne sous une configuration en triangle.

14. Système selon la revendication 11, dans lequel ladite pompe à liquide (35) est également montée sur ledit arbre rotatif (28).

15. Système selon l'une quelconque des revendications 8 à 14, dans lequel ladite machine rotative (4) comprend deux moteurs électriques axialement espacés.

16. Système selon la revendication 15, dans lequel lesdits moteurs électriques sont séparés.

17. Système selon la revendication 15, dans lequel lesdits moteurs électriques sont associés avec un arbre rotatif commun.

18. Système selon l'une quelconque des revendications 15 à 17, dans lequel lesdits moteurs électriques sont démarrés en séquence afin de réduire le courant de démarrage de pointe.

19. Système selon l'une quelconque des revendications 1 à 7, dans lequel ladite machine rotative (4) comprend un moteur hydraulique, et un générateur à traînée visqueuse (61, 62) entraîné par ledit moteur hydraulique (60), et à travers lequel ledit carburant est amené à s'écouler au moyen de ladite pompe à liquide (36) et dans lequel ledit carburant est amené à être réchauffé.

20. Système selon la revendication 19, dans lequel ledit moteur hydraulique (60) comprend deux pignons (63, 64) en engrènement mutuel, qui sont amenés à tourner en sens opposés par le fluide hydraulique admis dans ledit moteur hydraulique (60), l'un desdits pignons ou les deux étant accouplés audit générateur à traînée visqueuse (61, 62).

21. Système selon l'une quelconque des revendications 1 à 7, dans lequel ladite machine rotative (4) comprend un moteur pneumatique, et un générateur à traînée visqueuse (61, 62) entraîné par ledit moteur (81), à travers lequel ledit carburant est amené à s'écouler au moyen de ladite pompe à liquide (36), et dans lequel ledit carburant est amené à être réchauffé.

22. Système selon la revendication 21, dans lequel ledit moteur pneumatique (81) comprend une turbine à air (82).

23. Système selon la revendication 22, dans lequel ladite turbine à air (82) comprend une turbine axiale ou radiale, du type à impulsion ou à réaction, la turbine (82) étant accouplée à un arbre (28) dudit générateur à traînée visqueuse (61, 62).

24. Système selon la revendication 21, dans lequel ledit moteur pneumatique (81) comprend un moteur à air.

25. Système selon la revendication 24, dans lequel ledit moteur à air comprend deux engrenages ou rotors, en engrènement mutuel, qui sont amenés à tourner en sens inverse, au moyen de l'air admis vers ledit moteur à air, l'un des deux engrenages, ou les deux, étant accouplés audit générateur à traînée visqueuse.

26. Système selon l'une quelconque des revendications 19 à 25, dans lequel ledit générateur à traînée visqueuse (61, 62) comprend un rotor cylindrique (71, 72) entraîné par ledit moteur, et un stator cylindrique (68) qui entoure ledit rotor (68), ledit carburant étant amené à s'écouler entre ledit rotor (68) et ledit stator (71, 72) pour être chauffé par traînée visqueuse entre eux.

27. Système selon la revendication 26, dans lequel ledit générateur à traînée visqueuse (61, 62) comprend un rotor cylindrique intérieur (72) et un rotor cylindrique extérieur (73), tous deux entraînés par ledit moteur hydraulique (60), et un stator cylindrique (68) qui est disposé entre ledit rotor intérieur (72) et ledit rotor extérieur (73).

28. Système selon l'une quelconque des revendications 19 à 27, dans lequel le générateur à traînée visqueuse (61, 62) comprend un rotor à deux tronçons (61, 62) qui sont axialement séparés, ledit carburant étant amené à s'écouler à l'intérieur dudit générateur à traînée visqueuse (61, 62) entre lesdits deux tronçons (61, 62) afin de minimiser la charge axiale sur ledit rotor (61, 62) en raison de la pression dudit liquide.

29. Système selon l'une quelconque des revendications précédentes, dans lequel ladite machine rotative (4) et ladite pompe à liquide (18, 36) sont construites sous la forme d'une unité intégrée destinée à être montée dans ledit réservoir de stockage de carburant.

30. Système selon l'une quelconque des revendications précédentes, comprenant un ou plusieurs clapets coupe-feu (10) disposés dans le trajet d'écoulement dudit carburant afin d'isoler des parties de celui-ci.
